# EUROPÄISCHE PATENTSCHRIFT

(11) **EP 1 564 057 B1**
(45) Veröffentlichungstag und Bekanntmachung des Hinweises auf die Patenterteilung: **26.03.2008**
(21) Anmeldenummer: 04290347.6
(22) Anmeldetag: 10.02.2004
(51) Int. Cl.: B60K 15/035

(54) **Ventil-Anordnung mit mehreren in Reihe geschalteten Ventilen zur Verhinderung eines Kraftstoffausfliessens bei Fahrzeugtanks unabhängig von der Orientierung des Fahrzeugs**
Valve arrangement including several serially connected valves to prevent fuel losses of vehicle tanks independently of the orientation of the vehicle
Agencement de vannes comprenant une pluralité de vannes liées en série pour empêcher une fuite de carburant d'un réservoir de véhicule indépendamment de l'orientation du véhicule

(43) Veröffentlichungstag der Anmeldung: 17.08.2005
(73) Patentinhaber: Effbe-France S.A.S., 68440 Habsheim (FR)
(72) Erfinder: Nast, Xavier, 68000 Colmar (FR)
(74) Vertreter: Weber-Bruls, Dorothée

(56) Entgegenhaltungen:
- DE-C- 3 709 925
- FR-A- 2 836 660

## Beschreibung

Die Erfindung betrifft eine Ventil-Anordnung für einen Behälter, wie einen Kraftstoffbehälter, wobei die Ventil-Anordnung einen Einlaß, der dem Behälterinneren zuzuwenden ist, einen Auslaß, der dem Behälteräußeren zuzuwenden ist, und eine fluidale Verbindungsleitung zwischen dem Einlaß und dem Auslaß aufweist.

Derartige Ventil-Anordnungen haben hauptsächlich zwei Funktionen, nämlich einen Gasstrom zwischen dem Behälterinneren und dem Behälteräußeren zuzulassen, während ein Ausfließen der in dem Behälter gehaltenen Flüssigkeit insbesondere bei Überfüllung des Behälters verhindert werden soll. Insbesondere bei sich leicht verflüchtigenden Flüssigkeiten, beispielsweise Flüssigkraftstoffen, wie Benzin, ist es aufgrund der sich im Behälterinnenraum bildenden Gase und des sich dadurch erhöhenden Innendrucks des Behälters notwendig, die flüchtigen Gase aus dem Behälter abströmen zu lassen. Bevor das ausströmenden Gas allerdings an die Atmosphäre abgegeben wird, ist es in einem an den Behälter angeschlossenen Kanister oder Kondensator zu reinigen.

Es ist bekannt, für diesen Zweck bestimmte Ventil-Anordnungen mit einem Schwimmer zu versehen, der in einer passiven, nicht-verschließenden Stellung die Verbindungsleitung zwischen dem Behälterinneren und dem Behälteräußeren offen hält. Sobald das Flüssigkeits-Niveau ansteigt und den Schwimmer erreicht, bewirkt das Auftriebsvermögen des Schwimmers in der Flüssigkeit das fluidale Trennen der Verbindungsleitung der Ventil-Anordnung.

Eine derartige Ventil-Anordnung für einen Kraftstoffbehälter ist aus dem EP 0 976 597 B1 bekannt, bei der ein federunterstützter Schwimmkörper aufgrund seines Eigengewichts und eines zusätzlichen Kugelgewichts entgegen der Federkraft in eine die Fluidleitung öffnende Stellung gebracht ist. Eine Kanalstruktur gewährleistet, daß sich im Behälter verflüchtigtes Gas stets auch in geschlossener Stellung des Schwimmkörpers abströmen kann. Bei ansteigendem Flüssigkeits-Niveau wirkt die Auftriebskraft derart entgegen den Gewichtskräften von Schwimmköper und Kugel, daß die Federkraft dazu ausreicht, die Gewichtskräfte zu überwinden, um die Hauptfluidleitung zu schließen. Bei einer 180°-Wendung des Kraftstoffbehälters, beispielsweise im Falle eines Unfalls, bei dem das Kraftfahrzeug auf dem Dach liegen bleibt, gelangt die Kugel in eine Notverschlußposition, in welcher der Auslaß der Ventil-Anordnung verschlossen wird. Bei der bekannten Ventil-Anordnung ist von Nachteil, daß bei bestimmten Not-Lagen des Behälters die Ventil-Anordnung die Verbindungsleitung nicht sicher schließt. Sollte z. B. das Kraftfahrzeug in eine auf der Seite liegende Lage gebracht sein, so gelangt die Kugel nicht in die den Auslaß verschließende Position. Das gleiche gilt bei beispielsweise um 30° bis 45° gegenüber der normalen horizontalen Lage geneigten Kraftfahrzeugpositionen, weil die auf den Schwimmkörper wirkende Auftriebskraft, insbesondere die Richtungskomponente der Auftriebskraft in Wirkrichtung der Federkraft, nicht mehr dazu ausreicht, den Schwimmkörper insbesondere wegen der hohen Reibungskräfte an der Gehäusewand in die Verschlußstellung zu bringen, und es kann somit zu einem Auslaufen der Flüssigkeit durch die Verbindungsleitung hindurch kommen. Auch bei einem aufgrund starker auf die Flüssigkeit wirkender Zentrifugalkräfte ansteigenden Flüssigkeitsspiegel, der bis über den Auslaß der Ventil-Anordnung reichen kann, ist es möglich, daß der Schwimmkörpers zwar zumindest teilweise von der Flüssigkeit umspült wird, allerdings die dabei auftretenden Auftriebskräfte am Schwimmkörper nicht dazu ausreichen, den Ventilkörper in eine Verschlußstellung zu verbringen, so daß Flüssigkeit durch die unverschlossene Verbindungsleitung aus dem Behälter austreten kann.

Aus FR 2 836 660 beinhaltet die Merkmale des Oberbegriffs des Anspruchs 1 ist ein Kraftstoffbehälter für ein Kraftfahrzeug bekannt, bei dem eine Gasablaßleitung in eine Kraftstoffbefüllungsleitung mündet, wobei in der Luftablaßleitung mehrere Ventile angeordnet sind.

Es ist Aufgabe der Erfindung, eine Ventil-Anordnung derart weiterzubilden, daß ein Ausfluß von Flüssigkeit über die Verbindungsleitung der Ventil-Anordnung auch dann verhindert wird, wenn die Flüssigkeit in dem Behälter hohen Zentrifugalkräften ausgesetzt wird und/oder die Ventil-Anordnung in unterschiedliche Not-Lagen gegenüber einer Normal-Lage geneigt ist.

Diese Aufgabe wird durch die Merkmale des Patentanspruchs 1 gelöst.

Danach umfaßt eine Ventil-Anordnung für einen Behälter, insbesondere einen Kraftstoffbehälter, mindestens drei im Verlauf der Verbindungsleitung zwischen Einlaß und dem Auslaß in Reihe angeordnete, selbst-schließende Ventileinheiten, wobei die wenigstens drei Ventileinheiten derart aufeinander abgestimmt sind, daß für unterschiedliche Lagen der Ventil-Anordnung in dreidimensionalem Raum jeweils mindestens eine Ventileinheit einen Ausfluß der Flüssigkeit durch die Verbindungsleitung hindurch verhindert oder zumindest behindernd aktiviert ist. Mit der erfindungsgemäßen Maßnahme ist eine multidirektionale Ventil-Anordnung bestehend aus selbst-schließenden Ventileinheiten geschaffen, welche einen Durchfluß von Flüssigkeit durch den Auslaß verhindern, in welcher Position auch immer sich die Ventil-Anordnung bzw. der Behälter im Raum befindet. Unter selbst-schließende Ventileinheit sind insbesondere nach dem Prinzip von Archimedes arbeitende Schwimmkörper-Ventile oder nach dem Gravitationsprinzip arbeitende Rückschlagventile zu verstehen. Derartige Ventileinheiten gewährleisten ein Belüften und Entlüften des Behälters in einem normalen Betriebslage oder -modus der Ventil-Anordnung. Unter normalem Betriebsmodus sei zu verstehen, daß auf die Ventil-Anordnung keine Flüssigkeitssäule einwirkt. Eine Not-Lage oder ein Not-Betriebsmodus, bei der die erfindungsgemäße Ventil-Anordnung die Verbindungsleitung zwischen Einlaß und Auslaß verschließt, liegt beispielsweise bei einem übervollen Behälter vor, bei dem in einer Normal-Lage des Behälters das Flüssigkeits-Niveau über dem Auslaß liegt. Als weitere Not-Lage seien jegliche Flüssigkeitsspiegel zu verstehen, die aufgrund von Einwirkung von Zentrifugalkräften über den Auslaß des Behälters liegen. Desweiteren sei unter Not-Lage der Ventil-Anordnung der Fall zu verstehen, bei dem die Ventil-Anordnung eine gegenüber deren Normal-Lage geneigte Stellung einnimmt und sich dadurch der Spiegel der in dem Behälter enthaltenen Flüssigkeit über den Auslaß der Verbindungsleitung hinaus reicht.

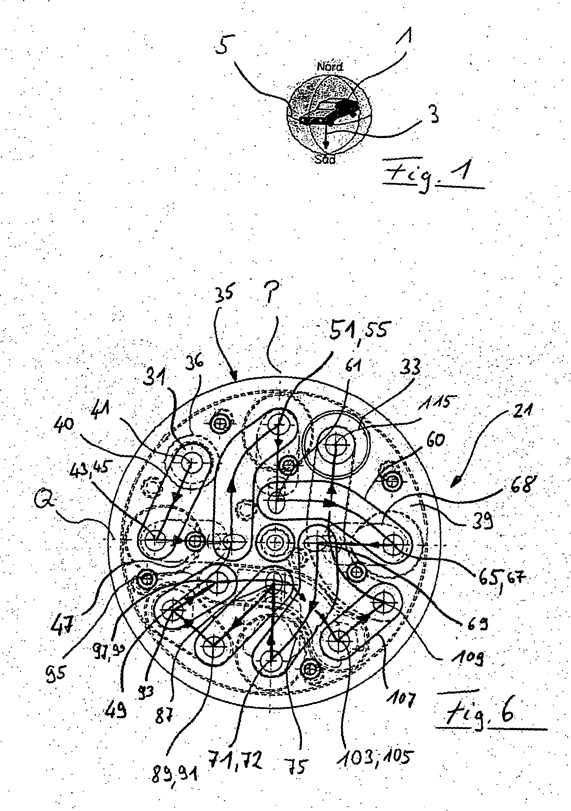

Die multidirektionale Ventil-Anordnung gewährleistet ein sicheres Abdichten der Ventil-Anordnung in jeder gegenüber der Normal-Lage geneigten Lage des Behälters. In diesem Zusammenhang sei auf Fig. 1 verwiesen, welche ein Kraftfahrzeug bezüglich eines festen Himmelsrichtungs-Koordinatensystems zeigt. Die multidirektionale Ventil-Anordnung schließt die Verbindungsleitung auch dann, wenn der Bodenaufbau des Kraftfahrzeugs nicht zum Südpol weist, d.h. wenn beispielsweise das Dach dem Südpol zugewandt ist.

Bei einer bevorzugten Weiterbildung der Erfindung sind drei, vier, fünf, sechs, sieben, über sieben oder höchstens sieben Ventileinheiten im Verlauf der fluidalen Verbindungsleitung in Reihe angeordnet, wobei vorzugsweise sechs Ventileinheiten vorzusehen sind.

Die mehreren Ventileinheiten sind dazu ausgelegt, in einem Normalbetriebsmodus, der insbesondere durch eine im wesentlichen horizontale Lage des Behälters oder dadurch definierbar ist, daß keines der Ventileinheiten in die Verschlußposition gestellt ist, ein Belüften und Entgasen des Behälters zuzulassen.

Insbesondere bei einer Mehrventileinheit-Anordnung, wie sechs Ventileinheiten, kann erfindungsgemäß vorgesehen sein, daß für bestimmte Not-Lagen des Behälters mindestens zwei Ventileinheiten für einen Schließvorgang zuständig sind. Dadurch ist ein redundanter Aufbau der Ventil-Anordnung insofern gewährleistet, als, sollte eine der aktivierbaren Ventileinheiten nicht schließen, die zweite insbesondere nachgeschaltete Ventileinheit den Verschlußvorgang vollziehen wird, sofern der Flüssigkeitsspiegel die jeweilige Ventileinheit überhaupt erreicht.

Bei einer Weiterbildung der Erfindung umfaßt die Ventil-Anordnung eine erste Ventileinheit-Gruppe, die wenigstens eine Ventileinheit aufweist, welche die Verbindungsleitung für eine aus einer Normal- oder Gasdurchlaßlage der Ventil-Anordnung gekippte oder geneigte erste Not-Lage der Ventilanordnung insbesondere in jeder Kipp- und/oder Neigungsrichtung innerhalb eines Neigungswinkelbereichs von bis zu 100° schließt, sobald im wesentlichen das Flüssigkeits-Niveau eine Ventileinheit erreicht. Mit Blick auf Fig. 1 sind damit Not-Lagen des Kraftfahrzeugs zu verstehen, bei denen sich eine in Normalposition des Kraftfahrzeugs zum Südpol weisende Normale im wesentlichen bis zum Äquator und unter Umständen ein bißchen darüber hinaus verlagert. Weiterhin kann erfindungsgemäß eine zweite Ventileinheit-Gruppe vorgesehen sein, die insbesondere wenigstens eine Ventileinheit umfaßt und die Verbindungsleitung für eine aus der Normallage, über die erste Not-Lage hinaus gekippte und/oder geneigte zweite Not-Lage insbesondere in jeder Kipp- und/oder Neigungsrichtung innerhalb eines Neigungswinkelbereichs von im wesentlichen 80° bis 180° schließt, sobald der Flüssigkeitsspiegel die mindestens eine Ventileinheit erreicht hat. Wieder Bezug nehmend auf Fig. 1 bedeutet dies, daß die in Normallage des Kraftfahrzeugs zum Südpol weisende Normale etwa in dem Bereich von dem Äquator bis zum Nordpol zeigt.

Bei einer Weiterbildung der Erfindung ist die erste Ventileinheit-Gruppe mit vier Ventileinheiten versehen, die insbesondere in unterschiedliche Raumrichtungen ausgerichtet sind und vorzugsweise in der Normallage der Ventil-Anordnung gegenüber der Erdgravitationsrichtung in einem nicht vernachlässigbaren Winkel geneigt sind. Der Neigungswinkel kann in einem Bereich von etwa 10° bis 80°, vorzugsweise etwa 20° bis 60°, vorzugsweise bei ca. 25°, zur Erdgravitationsrichtung liegen. Die vier Ventileinheiten können einen linearen Verschlußstellweg aufweisen, dessen Verschlußstellwegrichtung jeweils zu zwei oder zu allen anderen drei Verschlußstellrichtungen einen rechten Winkel bildet. Damit ist eine multidirektionale Auslegung der Ventil-Anordnung insbesondere für sämtliche Kraftfahrzeugpositionen gewährleistet, bei denen die Fahrzeugnormale in die südliche Hemisphäre (siehe Fig. 1) weist.

Die Verschlußstellwege der vier Ventileinheiten sind mit Richtungskomponenten nach Ost-West sowie nach Nord-Süd (siehe Fig. 1) versehen.

Vorzugsweise ist eine fünfte Ventileinheit vorgesehen, die einen linearen Verschlußstellweg aufweisen kann. Insbesondere ist die Verschlußstellwegrichtung der fünften Ventileinheit derart bestimmt, daß sie in der Normallage der Ventil-Anordnung mit der Erdgravitationsrichtung zusammenfällt. Die fünfte Ventileinheit gewährleistet insbesondere, daß es bei einer Ruheposition des Kraftfahrzeugs im Falle einer Überfüllung des Behälters zu keinem Flüssigkeitsaustritt an der Ventil-Anordnung kommt. Vorzugsweise ist die Verschlußstellwcgrichtung der fünften Ventileinheit mit gleichen Neigungswinkeln zu den Verschlußstellwegrichtungen der vier Ventileinheiten positioniert.

Bei einer Weiterbildung der Erfindung umfaßt die zweite Ventileinheit-Gruppe wenigstens ein Rückschlagventil. Das Rückschlagventil nutzt zum Verschließen der Verbindungsleitung die auf einen Ventilkörper wirkende Gravitationskraft, so daß das Rückschlagventil auch dann schließt, wenn sich keine Flüssigkeit an der Ventileinheit befindet. Das Rückschlagventil wird dann funktionsgemäß ausgelöst, wenn sich die Ventil-Anordnung aus der Normallage über eine der ersten Ventileinheit-Gruppe zugeordnete Not-Lage hinaus in eine zweite Not-Lage gekippt wird.

Erfindungsgemäß kann weiterhin vorgesehen sein, daß jeder Ventileinheit ein Wirkkegelbereich um eine Verschlußstellwegrichtung zugeordnet ist. Der Wirkkegelbereich ist ein gedachter geometrischer Bereich um die Verschlußstellwegrichtung, in welchem eine ausreichende Kraftrichtungskomponente der Stellkraft, beispielsweise der Auftriebskraft oder eine Federkraft, liegen muß, damit die Verschlußbewegung der Ventileinheit ausgelöst werden kann. Der Wegkegelbereich wird durch einen Kegelöffnungswinkel definiert, der mindestens bei bis ca. 45°, vorzugsweise bis ca. 60°, vorzugsweise bis ca. 90°, vorzugsweise bis 180°, liegt.

Bei einer besonderen Weiterentwicklung der Erfindung sind die Wirkkegelbereiche der Ventileinheiten derart im Raum ausgerichtet, daß sämtliche mögliche Wirkrichtungen der Stellkräfte zumindest innerhalb eines der Wirkkegelbereiche fällt. Für einen redundanten Aufbau der erfindungsgemäßen Ventil-Anordnung kann es vorgesehen sein, die Wirkkegelbereiche derart zueinander anzuordnen, daß sie sich überlappen und somit wenigstens zwei Ventileinheiten zumindest für einen Teil der Stellungen der Ventil-Anordnung im dreidimensionalen Raum die Verbindungsleitung schließen können. Vorzugsweise liegt der Wirkkegelbereich insbesondere für die erste Ventileinheit-Gruppe bei ca. 15°, ca. 30°, ca. 45°, ca. 50°, ca. 55°, ca. 60°, ca. 65°, ca. 70°, ca. 75°, ca. 80°. Bei der zweiten Ventileinheit-Gruppe liegt der Wirkkegelbereich erfindungsgemäß bei ca. 180°.

Bei einer besonderen bevorzugten Ausführung der Erfindung sind sämtliche Ventileinheiten derart zueinander angeordnet, daß sie im wesentlichen eine gemeinsame Ebene aufspannen. Auf diese Weise kann ein sehr flacher Aufbau für die erfindungsgemäße Ventil-Anordnung gewährleistet sein.

Eine einfach realisierbare und multidirektional wirkende Anordnung von Ventileinheiten wird erfindungsgemäß dadurch gebildet, daß vier Ventileinheiten in einer Kreuzanordnung zueinander positioniert sind.

Vorzugsweise sind die vier Ventileinheiten insbesondere der ersten Ventileinheit-Gruppe im wesentlichen auf einer gemeinsamen Kreislinie angeordnet. Bei der Kreuzanordnung sowie der Anordnung der Ventileinheiten auf einer Kreislinie existieren Zwischenräume zwischen zwei benachbarten Ventileinheiten, welche zur Positionierung einer weiteren Ventileinheit genutzt werden kann. Insbesondere die fünfte Ventileinheit, die in Normallage mit der Erdgravitationsrichtung ausgerichtet ist, und eine oder zwei Ventileinheiten der zweiten Ventileinheit-Gruppe können in den Zwischenräumen angeordnet sein. Schließlich kann auch der Auslaß der Ventil-Anordnung in einem Zwischenraum liegen, wobei der Einlaß der Ventil-Anordnung in Ausflußrichtung unmittelbar vor der ersten Ventileinheit liegt.

Insbesondere für die erste Ventileinheit-Gruppe sind die Ventileinheiten als Schwimmkörper ausgeführt. In einem Gehäusekörper der Ventil-Anordnung ist eine Führung ausgebildet, die ein lineares Gleiten des Schwimmkörpers entsprechend dem Verschlußstellweg innerhalb des Gehäusekörpers zuläßt. Vorzugsweise sind sämtliche Ventileinheiten in einer Gehäusestruktur untergebracht, welche aus einem Stück gefertigt, insbesondere aus einem Kunststoffstückstück gespritzt, ist.

Da sämtliche Ventileinheiten erfindungsgemäß in Reihe in der Verbindungsleitung zwischen Einlaß und Auslaß der Ventil-Anordnung positioniert sind und je nach Lage des Flüssigkeitsspiegels zum Auslösen aktivierbar sind, ist gewährleistet, daß zumindest eine Ventileinheit im Fall der Gefahr des Auslaufens von Flüssigkeit aus der Öffnung des Behälters schließt. Befindet sich der Behälter in einer Not-Lage, so kann beispielsweise die von dem Einlaß in Ausflußrichtung erste und zweite Ventileinheit offen sein, während die dritte Ventileinheit auf das Ansteigen des Flüssigkeitsspiegels hin anspricht.

Desweiteren betrifft die Erfindung eine Ventil-Anordnung für einen Behälter, wie einen Kraftstoffbehälter, welche Ventil-Anordnung einen Einlaß, der dem Behälterinneren zuzuwenden ist, einen Auslaß, der dem Behälteräußeren zuzuwenden ist, und eine fluidale Verbindungsleitung zwischen dem Einlaß und dem Auslaß aufweist.

Die oben beschriebenen bekannten Ventil-Anordnungen dieser Art zeichnen sich durch eine besonders in Stellwegrichtung der Ventilkörper große Ausdehnung, nämlich durch eine beträchtliche Höhe, aus, so daß derartige Ventil-Anordnungen für insbesondere immer häufiger zum Einsatz kommende flache und sich radial in Breiten- und Längsrichtung erstreckende Kraftstoffbehälter nicht eingesetzt werden können.

Es ist Aufgabe der Erfindung, eine gattungsgemäße Ventil-Anordnung derart weiterzubilden, daß sie bei Kraftstoffbehältern flacher Bauweise einsetzbar ist.

Diese Aufgabe wird insbesondere dadurch gelöst, daß die Verbindungsleitung, die insbesondere durch einen einteiligen Gehäusekörper zumindest teilweise begrenzt ist, zwischen dem Einlaß und dem Auslaß der Ventil-Anordnung mindestens einen Richtungswechsel aufweist. Unter Richtungswechsel kann beispielsweise eine Kehre, insbesondere um 180° und/oder 270° verstanden werden. Andere Abbiegungen, die den Hauptflußstrom zwischen Einlaß und Auslaß insbesondere um 90° umlenken können, sollen ebenfalls unter einem Richtungswechsel verstanden sein. Mit dem Richtungswechsel gelingt es, zum einen den Widerstand gegen das Ausfließen der Flüssigkeit zu erhöhen, zum anderen die Dimension der Ventil-Anordnung dahingehend einzustellen, daß auch flache Bauweisen für Ventil-Anordnungen, angepaßt an zukünftige flache Kraftstoff-Behälter, einfach realisierbar sind. Vorzugsweise liegt stromauf wärts und/oder stromabwärts des Richtungswechsels ein durch den Gehäusekörper zumindest teilweise begrenzter Raum, in dem eine Ventileinheit untergebracht ist. Mehrere Räume können in einer Ebene angeordnet sein und sind untereinander mit Leitungsstücken verbunden, die den starken Richtungswechsel des Flusses erzwingen.

Bei einer bevorzugten Weiterbildung der Erfindung ist die Verbindungsleitung kanalförmig und/oder labyrinthartig in einem Gehäusekörper angebracht. Um die Montierbarkeit der Ventileinheiten in der Verbindungsleitung zu erleichtern, kann wenigstens eine Abdeckung vorgesehen sein, welche an dem Gehäusekörper, welcher eine Kammer zum Aufnehmen der Ventileinheitcn zumindest teilweise bilden kann, fest anbringbar ist. Vorzugsweise sind zwei an gegenüberliegenden Seiten des Gehäusekörpers anzubringende Gehäusedeckel vorzusehen, um das Montieren und ggf. Demontieren von Ventileinheiten von beiden Seiten einfach zu ermöglichen.

Insbesondere kann sich die Verbindungsleitung abschnittsweise in wenigstens zwei Ebenen erstrecken. In den beiden in einem Abstand voneinander angeordneten, insbesondere parallelen Ebenen sind Leitungsstücke zwischen den Kammern vorgesehen, in welchen die Ventileinheiten jeweils untergebracht sind. Dabei ist es der Abstand zwischen den beiden Ebenen, der die Ausmaße der Kammern bestimmt, die zwischen den beiden Ebenen liegen. Die die Ebenen verbindenden Kammern können in jeglicher Winkelanordnung zu den im wesentlichen parallelen Ebenen angeordnet werden, womit die oben genannte Multidireltionalität der erfindungsgemäßen Ventil-Anordnungen realisierbar ist.

Auf diese Weise wird erreicht, die Gehäusestruktur einer Ventil-Anordnung flach auszubilden, d. h. insbesondere, daß der Gehäusekörper wesentlich größere Ausdehnungen in Längs- und Breitenrichtung als in Höhenrichtung aufweist.

Desweiteren betrifft die Erfindung ein Ventil mit einem Gehäusekörper, in dem eine erfindungsgemäße, Ventil-Anordnung zumindest teilweise untergebracht ist, wobei insbesondere der Gehäusekörper die Verbindungsleitung zumindest teilweise begrenzt und vorzugsweise mindestens eine an dem Gehäuse befestigbare Abdeckung, vorzugsweise zwei Abdeckungen, vorgesehen ist/sind.

Desweiteren betrifft die Erfindung einen Behälter mit einer Ventil-Anordnung oder mit einem Ventil. Der Auslaß der Ventil-Anordnung ist mit einem Kanister verbunden, der aus dem Behälter austretende Gasgemische, nämlich ein Gemisch aus flüchtigem Kraftstoff und Luft, behandelt, so daß die flüchtigen Gase nicht an die Atmosphäre abgegeben werden. Der erfindungsgemäße Behälter kann wenigstens einen oder mehrere Ventil-Anordnungen aufweisen.

Insbesondere sind sie an der in der Normallage obersten Stelle des Behälters angeordnet. Desweiteren ist die insbesondere flache Ventil-Anordnung in einem in der Normallage horizontalen Wandbereich angeordnet, zu dem die Erdgravitationsrichtung senkrecht steht.

Weitere Eigenschaften, Vorteile und Merkmale der Erfindung werden durch die folgende Beschreibung bevorzugter Ausführungen anhand der beiliegenden Zeichnungen deutlich, in denen zeigen:
- Fig. 1: ein schematisches Schaubild zur Verdeutlichung der möglichen Betriebs- und/oder Not-Lagen eines Kraftfahrzeugs mit Bezug auf ein Kugelkoordinationssystem;
- Fig. 2: eine perspektivische Unteransicht einer erfindungsgemäßen Ventil-Anordnung in einer ersten Ausführung;
- Fig. 3: eine Unteransicht der Ventil-Anordnung gemäß Fig. 2;
- Fig. 4: eine Querschnittsansicht entlang der Schnittlinie IV-IV gemäß Fig. 3;
- Fig. 5: eine Draufsicht der Ventil-Anordnung gemäß der Fig. 2;
- Fig. 6: eine der Fig. 5 entsprechende Draufsicht einer um 90° entgegen den Uhrzeigersinn gedrehten Ventil-Anordnung, wobei die Struktur der Unterseite der Ventil-Anordnung strichliert dargestellt ist;
- Fig. 7: eine Querschnittsansicht einer unteren Abdeckung der Ventil-Anordnung gemäß Fig. 2;
- Fig. 8: eine Querschnittsansicht entsprechend der gemäß Fig. 4, wobei eine vollständig montierte Ventil-Anordnung mit oberer und unterer Abdeckung (gemäß Fig. 7) dargestellt ist; ist;
- Fig. 9: eine Prinzipskizze einer weiteren Ausführung einer erfindungsgemäßen Ventil-Anordnung entsprechend einer wie in Fig. 6 gezeigten Draufsicht;
- Fig. 10: eine Schnittseitenansicht durch eine Ventileinheit der erfindungsgemäßen Ventil-Anordnung nach Fig. 9; und
- Fig. 11: eine Prinzipskizze eines erfindungsgemäßen Behälters, in dem zwei erfindungsgemäße Ventil-Anordnungen montiert sind.

Fig. 1 zeigt ein Kraftfahrzeug 1, daß in einer horizontalen Stellung dargestellt ist, d. h. das Kraftfahrzeug befindet sich in einem Normalbetriebsmodus, sowie auch der nicht näher dargestellte Kraftstoffbehälter des Kraftfahrzeugs.

Im Folgenden wird die Stellung des Kraftfahrzeugs 1 anhand der sich von der Unterseite des Kraftfahrzeugs 1 erstreckenden Normalen 3 definiert, welche in dem Normalbetriebsmodus des Kraftfahrzeugs 1 in südlicher Richtung des festen Kugelkoordinatensystems zeigt. Sollte beispielsweise das Kraftfahrzeug auf einem hohen Bordstein geparkt werden, ist das Kraftfahrzeug bezüglich der horizontalen Lage im Normalbetriebsmodus geneigt, so daß die Norm male 3 von dem Südpol innerhalb der südlichen Hemisphäre geneigt ist. Im Falle eines Unfalls, bei dem das Kraftfahrzeug beispielsweise auf der Seite liegt, zeigt die Normale 3 auf Höhe des Äquators 5. Sollte es zu einem Überschlag des Kraftfahrzeugs kommen und das Kraftfahrzeug auf dem Dach liegen bleiben, so weist die Normale 3 zum Nordpol.

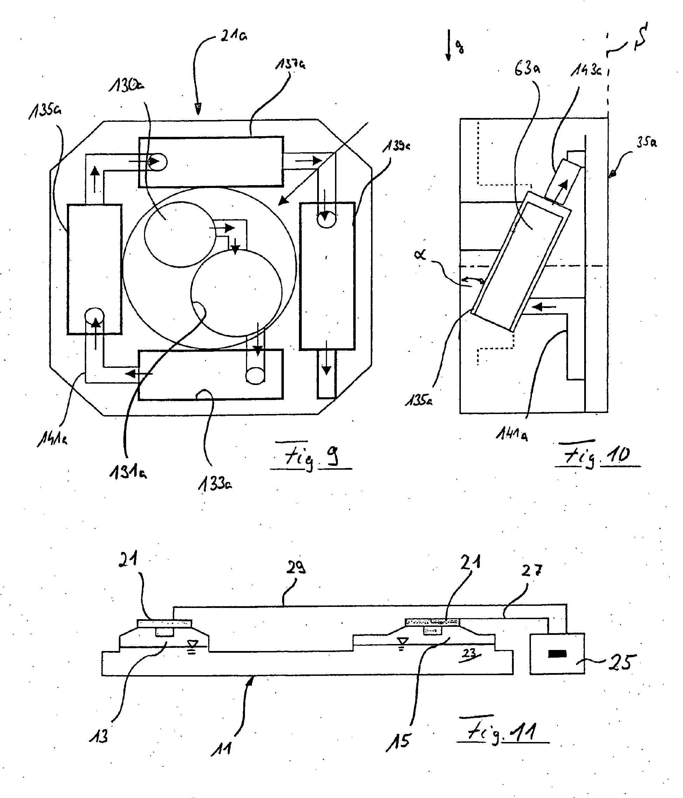

In Fig. 11 ist ein typischer moderner Kraftstoffbehälter 11 flacher Bauweise dargestellt. Der Behälter 11 weist zwei größer volumige Abteile 13 und 15 auf, an deren oberen Ende jeweils eine erfindungsgemäße Ventil-Anordnung 21 in die Behälterwand eingesetzt ist. Hauptaufgabe der erfindungsgemäßen Ventil-Anordnung im Normalbetriebsmodus, d. h. der Flüssigkeitsspiegel der in dem Kraftstoffbehälter enthaltenen Flüssigkeit 23 liegt unterhalb der Ventil-Anordnung 21, besteht darin, sich von der Flüssigkeit verflüchtigendes Gas in den Abteilen 13 bzw. 15 zu einem Kondensator oder Kanister 25 über eine Abgasleitung 29 bzw. 27 abfuhren zu können. Um den Aufbau der erfindungsgemäßen Ventil-Anordnung 21 so einfach wie möglich zu gestalten, sind keine Pumpenanordnungen in der Ventil-Anordnung 21 vorgesehen, wobei der natürliche Druckunterschied zwischen dem Kanister 25 und den Abteilen 13 und 15 genutzt wird, um das flüchtige Gas aus den Abteilen 13, 15 ableiten zu können. Im Normalbetriebsmodus sind die Ventil-Anordnungen 21 derart ausgeführt, daß ein im wesentlichen ungehinderter Gasstrom von den Abteilen 13 bzw. 15 über die Ablaßleitungen 29 bzw. 27 zum Kanister 25 abströmen kann.

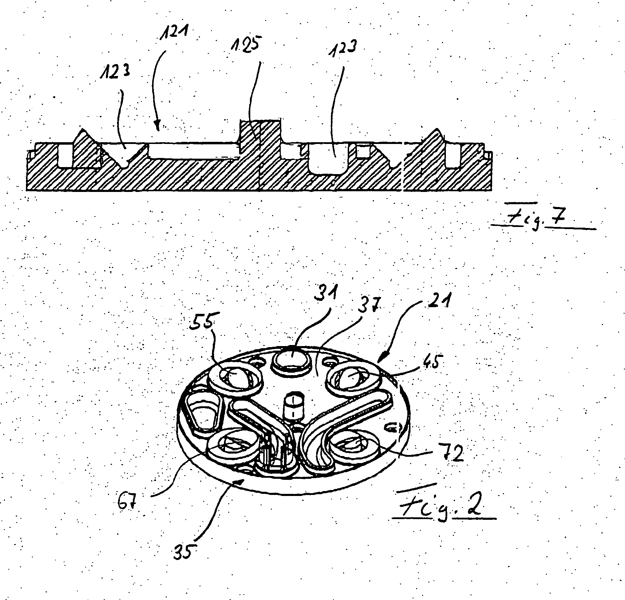

In Fig. 2 ist eine Ausführung der erfindungsgemäßen Ventil-Anordnung 21 dargestellt, die sieben Ventileinheiten in einer Verbindungsleitung in Reihe angeordnet aufweist, wobei die Verbindungsleitung einen Auslaß mit einem Einlaß 31 verbindet. Der Auslaß ist dem Behälteräußeren zuzuordnen, während der Einlaß 31 dem Behälterinneren zuzuordnen ist.

Im Folgenden wird anhand der Fig. 2, 3, 4, 5 und 6 der Verlauf der Verbindungsleitung vom Einlaß 31 zum Auslaß 33 beschrieben.

Die erfindungsgemäße Ventil-Anordnung 21 umfaßt eine Gehäusegrundstruktur 35, welche größtenteils die den Einlaß 31 mit dem Auslaß 33 verbindende Verbindungsleitung strukturell begrenzt, welche sich labyrinthartig und/oder kanalartig durch die Gehäusegrundstruktur 35 erstreckt.

Wie in Fig. 2 ersichtlich ist, erstreckt sich die Verbindungsleitung von dem Einlaß 33 im wesentlichen senkrecht in die Gehäusegrundstruktur 35 und durch letzteren hindurch entlang einer ersten Ventilkammer 36 von der Innenseite 37 der Gehäusegrundstruktur 35 an die Außenseite 39 zur Position 41. In der ersten Ventilkammer 36 ist ein Schwimmkörper beweglich angeordnet, der eine lineare, zur Achse S des Gehäusegrundkörpers 35 parallele Verschlußstellbewegung vollziehen kann. Von der Position 41 (10:30 Uhr, siehe Fig. 6) erstreckt sich die Verbindungsleitung entlang einer in die Außenseite 39 eingebrachten Rinne 40 zur Position 43 (09:00 Uhr, siehe Fig. 6), wovon sich die Verbindungsleitung durch den Gehäusegrundkörper 35 hindurch entlang eines Leitungsstücks zur Innenseite 37 erstreckt, wo die Verbindungsleitung an der Position 45 (09:00 Uhr, siehe Fig. 6) austritt.

Von der Position 45 an der Unterseite 37 des Gehäusegrundkörpers 35 gelangt die Verbindungsleitung in eine zweite Ventilkammer 47, in welcher die zweite Ventileinheit (nicht näher dargestellt) untergebracht ist, die einen Schwimmkörper aufweist, der dichtend mit einem nicht näher dargestellten Ventilsitz am Gehäusegrundkörper 35 in Eingriff kommt, sobald die Flüssigkeit dem Ventilkörper die entsprechend gerichtete und starke Auftriebskraft mitteilt. Die zweite Ventilkammer 47 führt der Schwimmkörper parallel zur Querrichtung Q und geneigt (45°) zur Symmetrieachse S des Gehäusegrundkörpers 35.

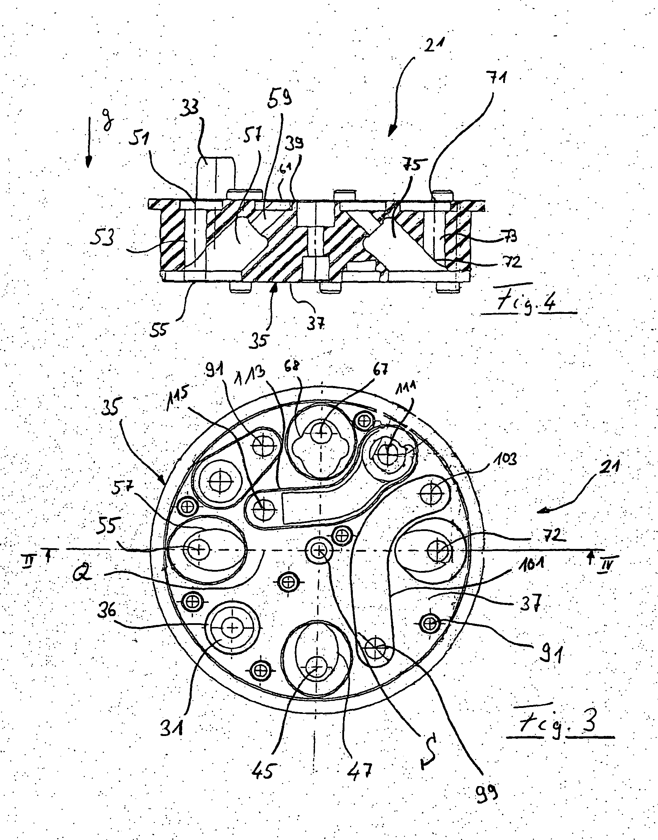

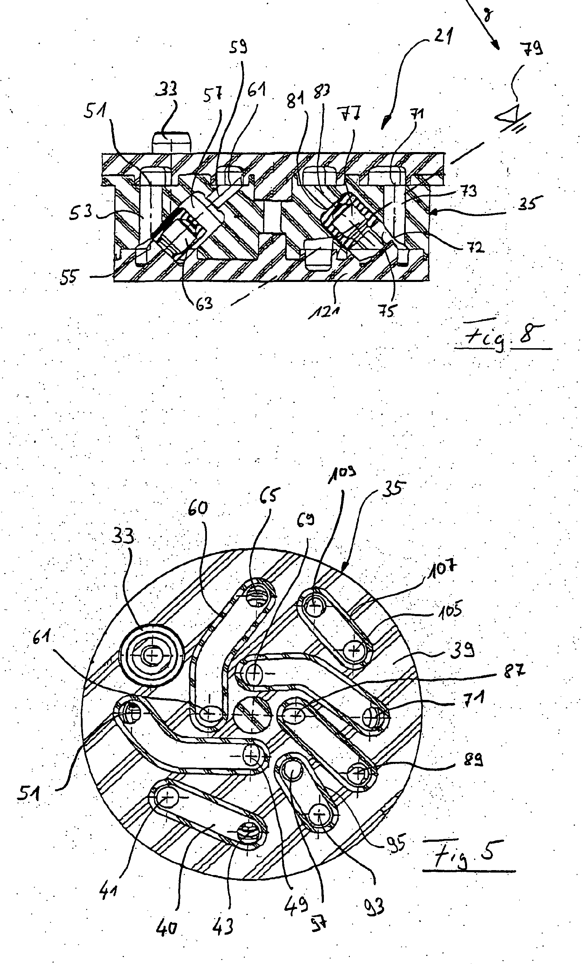

Die Verbindungsleitung erstreckt sich von der Position 45 durch die zweite Ventilkammer 47 hindurch zu einer Position 49, an der die Verbindungsleitung an der Außenseite 39 des Gehäusegrundkörpers 35 austritt. Die Verbindungsleitung erstreckt sich dabei in einem im wesentlichen 45°-Winkel zur Symmetrieachse S des Gehäusegrundkörpers 35, welche Symmetrieachse S im eingebauten Zustand der Ventil-Anordnung 21 bei Normalbetriebsmodus des Behälters 11 mit der Erdgravitationsrichtung g zusammenfällt (siehe Fig. 4). Aus diesem Grund ist die Position 43 zur Position 49 in Fig. 5 versetzt dargestellt.

An der Außenseite 39 der Gehäusegrundstruktur 35 erstreckt sich die Verbindungsleitung entlang einer Rille 50 zur Position 51 (12:00 Uhr, siehe Fig. 6). Vom Punkt 51 erstreckt sich die Verbindungsleitung in einem axialen Leitungsstück 53 (siehe Fig. 4 und 8) durch den Gehäusegrundkörper 35 hindurch zur Innenseite 37 und tritt an der Position 55 an der Innenseite 37 aus. An der Position 55 schließt eine dritte Ventilkammer 57 an, die sich im wesentlichen in einem 45°-Winkel zur Achse S erstreckt und parallel zur Querachse P liegt sowie in einem im gleichen Neigungswinkel gelagerten kurzen Leitungsstück 59 mündet, das an der Position 61 an der Außenseite 39 austritt. In der Ventilkammer 57 ist ein Schwimmkörper 63 angeordnet (siehe Fig. 8), der sich in einer Durchlaßstellung befindet, wobei Gas an dem Schwimmkörper außen vorbei in das Leitungsstück 59 strömen kann.

Von dem Punkt 61 an der Außenseite 39 des Gehäusegrundkörpers 35 erstreckt sich die teilweise durch den Gehäusegrundkörper 35 in Form einer Rille 60 gebildete Verbindunsleitung zur Position 65 (03:00 Uhr, siehe Fig. 6), wovon sich ein Leitungsstück axial durch den Gehäusegrundkörper 35 hindurch zur Position 67 an der Innenseite 37 der Gehäusegrundstruktur 35 gelangt. Von der Position 67 gelangt die Verbindungsleitung in eine vierte Ventilkammer 68 einer vierten Ventileinheit (nicht näher dargestellt), die sich durch den Gehäusegrundkörper 35 zu einem Leitungsstück (nicht näher dargestellt) zur Außenseite 39 der Gehäusegrundstruktur 35 zur Position 69 erstreckt. In der vierten Ventilkammer 68 ist ein Schwimmkörper (nicht dargestellt) beweglich derart gelagert, daß er zum Verschließen der Verbindungsleitung parallel zur Querrichtung und geneigt (45°) zur Achse S gestellt werden kann. Von der Position 69 an der Außenseite 39 der Gehäusegrundstruktur 35 gelangt die Verbindungsleitung über eine Rinne 70 in der Gehäusegrundstruktur 35 zur Position 71 an der Außenseite 39 der Gehäusegrundstruktur (06:00 Uhr, siehe Fig. 6). Von der Position 71 quert das Leitungsstück 73 die Gehäusegrundstruktur axial zur Position 72. Von der Position 72 erstreckt sich die Verbindungsleitung in Querungsrichtung P, zur Achse S geneigt in eine fünfte Ventilkammer 75, in der eine fünfte Ventileinheit in Form eines Schwimmkörpers 77 gleitbar angeordnet ist (siehe Fig. 8). Ist die Ventilanordnung 21 gegenüber ihrer Einbaulage derart in eine Not-Lage geneigt (wie in Fig. 8 angedeutet ist), daß die fünfte Ventileinheit auf Höhe des Wasserspiegels 79 liegt, ermöglicht die Auftriebskraft am Schwimmkörper 77 ein Verschieben des Ventilkörpers 77 hin zu einem Ventilsitz 81, der durch den Anfang des Leitungsstücks 83 ausgebildet ist.

Fig. 8 zeigt die Ventilanordnung in einer Not-Lage, bei welcher der Behälter in einer gegenüber der Normal-Lage um etwa 40° geneigten Position liegt, so daß der Flüssigkeitsspiegel 79, der in der Ruhelage, also auch ohne Zentrifugalkräfte, horizontal liegt, die Richtung der Antriebskraft bestimmt, die im wesentlichen in Führungsrichtung des gleitbar gelagerten Schwimmkörpers 77 gerichtet ist, so daß der Schwimmkörper aufgrund des Auftriebs hin zum Ventilsitz 81 gedrückt wird. In dieser Not-Situation ist es also die fünfte Ventileinheit, welche die Verbindungsleitung schließt.

Von dem querliegenden Leitungsstück 83 gelangt die Verbindunsleitung an der Außenseite 39 zur Position 87. Die Verbindungsleitung erstreckt sich von der Position 87 entlang einer geraden Rinne 88 an der Außenseite 39 des Gehäusegrundkörpers 35 zur Position 89 (07:00 Uhr, siehe Fig. 6), wovon sich ein Leitungsstück (nicht näher dargestellt) durch den Gehäusegrundkörper 35 hindurch zur Innenseite 37 zur Position 91 erstreckt. Von der Position 91 quert ein Leitungsstück (nicht dargestellt) den Gehäusegrundkörper 35 und tritt an der Außenseite 39 der Gehäusegrundstruktur 35 an der Position 93 aus. In der Verbindungsleitung zwischen der Position 91 und 93 ist eine sechste Ventileinheit in Form eines Rückschlagventils (nicht näher dargestellt) ausgebildet, welches dann ausgelöst wird, wenn die Normale 3 in die nördliche Hemisphäre gemäß Fig. 1 weist, also beispielsweise das Kraftfahrzeug auf der Motorhaube oder auf dem Dach liegen sollte. Von der Position 93 erstreckt sich die Verbindungsleitung entlang der Rinne 95 an der Außenseite 39 der Gehäusegrundstruktur 35 zur Position 97, wovon sich die Verbindungsleitung quer durch die Gehäusegrundstruktur 35 erstreckt und zur Position 99 an der Innenseite 37 der Gehäusegrundstruktur 35 gelangt. Entlang einer in die Gehäusegrundstruktur 35 an der Innenseite 37 ausgebildeten Rinne 101 gelangt die Verbindunsleitung zur Position 103 (05:00 Uhr, siehe Fig. 6), und erstreckt sich in einem Leitungsstück von dort von der Innenseite 37 axial zur Außenseite 39 zur Position 105 an der Außenseite 39 der Gehäusegrundstruktur 35.

Zwischen den Positionen 103 und 105 ist eine siebte Ventileinheit in Form eines Rückschlagventils ausgebildet, das als redundante Sicherung zur sechsten Ventileinheit vorgesehen ist. An der Außenseite 39 erstreckt sich die Verbindungsleitung von der Position 105 entlang der Verbindungsleitung 107 zur Position 109, wovon sich die Verbindungsleitung axial durch den Gehäusegrundkörper 35 zur Innenseite 37 zur Position 111 erstreckt. Entlang einer an der Innenseite 37 der Gehäusegrundstruktur 35 ausgebildeten Rinne 113 gelangt die Verbindungsleitung zur Position 115, wovon sich die Verbindungsleitung axial durch den Gehäusegrundkörper 35 zum Auslaß 33 erstreckt.

Die in den Fig. 2 bis 8 dargestellte erfindungsgemäße Ventil-Anordnung weist fünf Ventileinheiten (erste Ventileinheit bis fünfte Ventileinheit), welche für Not-Lagen des Kraftfahrzeugs bzw. des darin angeordneten Behälters 11 in der südlichen Hemisphäre (siehe Fig. 1) verantwortlich ist dahingehend, daß wenigstens eines der Ventileinheiten im Notfall, d. h. wenn der Flüssigkeitsspiegel die entsprechende Ventileinheit erreicht, die Verbindungsleitung schließt. Die Ventileinheiten 6 und 7 sind für das Schließen der Verbindungsleitung in Not-Lagen vorgesehen, wenn sich die Normale 3 in die nördliche Hemisphäre (siehe Fig. 1) gerichtet ist. Dabei kann auch nur eine Ventileinheit vorgesehen sein.

Mit der labyrinthartigen Struktur mit vielen Umkehrungen und Abbiegungen der Hauptströmung gemäß der Verbindungsleitung zwischen Ein- und Auslaß kann eine sehr kompakte sämtliche Ventileinheiten aufnehmende, flache Struktur gebildet werden.

Gemäß Fig. 7 ist eine untere Abdeckung dargestellt, welche nach dem Einsetzen der Ventileinheiten an der Gehäusegrundstruktur 35 anzubringen ist (siehe Fig. 8). Die untere Abdekkung 121 hat Vertiefungen 123, welche zum teilweisen Bilden der Verbindungsleitung eingebracht sind. Ein Mittelzapfen 125 dient zum Zentrieren der unteren Abdeckung 121, damit die Vertiefungen 123 an die an der Innenseite 37 der Gehäusegrundstruktur 35 ausgebildeten Rinnen zueinander passend zur Bildung der Verbindungsleitung zugeordnet werden können.

In die Fig. 9 und 10 ist eine weitere Ausführung der erfindungsgemäßen Ventil-Anordnung dargestellt, wobei zur besseren Lesbarkeit der Figurenbeschreibung für ähnliche oder identische Bauteile die selben Bezugsziffern verwendet werden, die mit einem zusätzlichen Buchstaben a versehen sind.

Die erfindungsgemäße Ventilanordnung 21a unterscheidet sich unter anderem von der Ventilanordnung 21 darin, daß lediglich ein Rückschlagventil zur Verhinderung des Durchflusses der Verbindungsleitung bei einer Position des Kraftfahrzeugs vorgesehen ist, bei der die Normale 3 in die nördliche Hemisphäre weist (siehe Fig. 1). Das einzige Rückschlagventil ist in einer zweiten Ventilkammer 131a stromaufwärtig vom Einlaß 31a angeordnet. Zwischen dem Einlaß 31a und der zweiten Ventilkammer 131a ist eine erste Ventileinheit vorgesehen, die eine axial (S) ausgerichtete Ventilkammer 130a und einen darin beweglichen Schwimmkörper (nicht dargestellt) umfaßt. Die erste Ventileinheit entspricht der Ventileinheit mit Kammer 36 der Ventil-Anordnung 21.

Von der Ventilkammer 131a erstreckt sich die Verbindungsleitung in eine Ventilkammer 133a, in der ein Schwimmkörper einer dritten Ventileinheit angeordnet ist. Danach sind in einer konzentrischen Konfiguration um die zweite Ventileinheit drei weitere Ventileinheiten im Verlauf der Verbindungsleitung in den jeweiligen Ventilkammern 135a, 137a und 139a in Reihe angeordnet. Von der Ventilkammer 139 gelangt die Verbindungsleitung zum nicht dargestellten Auslaß.

In Fig. 10 ist eine Querschnittszeichnung einer der dritten bis sechsten Ventileinheit mit Schwimmkörper dargestellt. Eine Zuführleitung 141a mündet in die Ventilkammer 135a, in welcher der Schwimmkörper 63 verschiebbar angeordnet ist. Von der Oberseite der Ventilkammer 135a erstreckt sich ein Leitungsstück 143a weg und quert den Gehäusegrundkörper 135a, um entlang eines Leitungsstücks 145a in die anschließende Ventilkammer 137a zu gelangen. Die Ventilkammern 133a bis 139a sind gegenüber einer Symmetrieachse S, mit welcher die Erdgravitationsrichtung g im eingebauten Normalbetriebsmodus der Ventil-Anordnung 21a zusammenfällt, wie in Fig. 10 dargestellt, in einem Winkel a geneigt, der in einem Bereich von ca. 25° liegt.

### Bezugszeichenliste

- 1: Kraftfahrzeug
- 3: Normale
- 5: Äquator
- 11: Kraftstoffbehälter
- 13, 15: Abteile
- 21, 21a: Ventil-Anordnung
- 23: Flüssigkeit
- 25: Entgasungskanister
- 27,29: Ablaßleitung
- 31, 31a: Einlaß
- 33: Auslaß
- 35: Gehäusegrundstruktur
- 36: erste Ventilkammer
- 37: Innenseite
- 39: Außenseite
- 40: Rinne
- 41,43,45: Positionen
- 47: zweite Ventilkammer
- 49: Position
- 50: Rille
- 51: Position
- 53: Leitungsstück
- 55: Position
- 57: dritte Ventilkammer
- 59: Leitungsstück
- 61: Position
- 63: Schwimmkörper
- 65, 67: Positionen
- 68: vierte Ventilkammer
- 69, 71: Positionen
- 73: Leitungsstück
- 75: Ventilkammer
- 77: Schwimmkörper
- 79: Wasserspiegel
- 80: Rinne
- 81: Ventilsitz
- 83: Leitungsstück
- 87: Position
- 88: Rille
- 89,91,93: Positionen
- 95: Rinne
- 97,99: Positionen
- 101: Rinne
- 103, 105: Punkte
- 107: Verbindungsleitung
- 109, 111: Punkte
- 113: Rille
- 115: Punkt
- 121: Abdeckung
- 123: Höhlen und Vertiefungen
- 125: Mittelzapfen
- 131a,133a: Ventilkammern
- 135a, 137a: Ventilkammern
- 139a: Ventilkammern
- 141a: Zuführleitung
- 143a, 145a: Leitungsstück
- S: Symmetrieachse
- Q: Querachse
- P: Querachse
- g: Gravitationsrichtung

## Patentansprüche

1. Ventil-Anordnung für einen Behälter, wie einen Kraftstoffbehälter (11), umfassend einen Einlaß (31, 31a), der dem Behälterinneren zuzuwenden ist, einen Auslaß (33), der dem Behälteräußeren zuzuwenden ist, und eine fluidale Verbindungsleitung (27, 29, 107) zwischen dem Einlaß (31, 31a) und dem Auslaß (33), wobei im Verlauf der fluidalen Verbindungsleitung (27, 29, 107) mindestens drei selbst-schließende Ventileinheiten angeordnet sind, **dadurch gekennzeichnet daß** die mindestens drei selbstschließende Ventileinheiten in Reihe angeordnet und derart aufeinander abgestimmt sind, daß für unterschiedliche vorbestimmbare Lagen der Ventil-Anordnung (21, 21a) im dreidimensionalen Raum jeweils mindestens eine Ventileinheit einen Ausfluß der Flüssigkeit durch die Verbindungsleitung (27, 29, 107) hindurch unterbindend oder zumindest behindernd aktiviert ist.

2. Ventil-Anordnung nach Anspruch 1, **dadurch gekennzeichnet, daß** drei, vier, fünf, sechs, sieben, über sieben oder höchstens sieben Ventileinheiten im Verlauf der fluidalen Verbindungsleitung (27, 29, 107) in Reihe angeordnet sind.

3. Ventil-Anordnung nach Anspruch 1 oder 2, **dadurch gekennzeichnet, daß** die wenigstens drei Ventileinheiten dazu ausgelegt sind, in einer Durchlaßstellung eine Gasströmung durch die Ventil-Anordnung (21, 21a) hindurch insbesondere zur Entgasung und/oder Belüftung zuzulassen.

4. Ventil-Anordnung nach einem der vorangegangenen Ansprüche, **dadurch gekennzeichnet, daß** in einem Normalbetriebsmodus der Ventil-Anordnung (21, 21a), der insbesondere durch eine im wesentlichen horizontale Lage des Behälters definierbar ist, sämtliche Ventileinheiten eine Durchlaßstellung einnehmen und in einem Notbetriebsmodus der Ventil-Anordnung (21, 21a), der insbesondere durch eine gegenüber der horizontalen Lage gekippten und/oder geneigten Not-Lage des Behälters und/oder durch einen bestimmten Flüssigkeitfüllstand des Behälters definierbar ist, mindestens eine Ventileinheit selbständig eine Verschlußstellung einnimmt.

5. Ventil-Anordnung nach einem der vorangegangenen Ansprüche, **dadurch gekennzeichnet, daß** jeglicher Not-Lage des Behälters und/oder einem bestimmten Flüssigkeitfüllstand des Behälters jeweils mindestens eine selbst-schließende Ventileinheit zugeordnet ist, insbesondere in bestimmten Not-Lagen-Bereichen wenigstens zwei sich selbstständig schließende Ventileinheiten.

6. Ventil-Anordnung nach einem der vorangegangenen Ansprüche, **dadurch gekennzeichnet, daß** eine erste Ventileinheit-Gruppe vorgesehen ist, die wenigstens eine Ventileinheit aufweist, welche die Verbindungsleitung für eine aus einer Normal- oder Gasdurchlaßlage der Ventil-Anordnung (21, 21a) gekippte oder geneigte, erste Not-Lage der Ventil-Anordnung insbesondere in jeder Kipp- und/oder Neigungsrichtung innerhalb eines Neigungswinkelbereichs von bis zu 100° verschließt, sobald das Flüssigkeitsniveau im wesentlichen eine Ventileinheit erreicht, wobei insbesondere eine zweite Ventileinheit-Gruppe vorgesehen ist, die wenigstens eine Ventileinheit umfaßt und die Verbindungsleitung (27, 29) für eine aus der Normal- oder Gasdurchlaßlage, über die erste Not-Lage hinaus gekippte und/oder geneigte zweite Not-Lage insbesondere in jeder Kipp- und/oder Neigungsrichtung innerhalb eines Neigungswinkelbereichs gegenüber der Normallage der Ventil-Anordnung (21, 21a) von im wesentlichen über 80° bis 180° schließt, sobald das Flüssigkeitsniveau die mindestens eine Ventileinheit erreicht, wobei insbesondere die erste Ventileinheit-Gruppe vier Ventileinheiten umfaßt, die jeweils einen linearen Verschlußstellweg aufweisen, insbesondere in unterschiedliche Raumrichtungen ausgerichtet sind und vorzugsweise in der Normallage der Ventil-Anordnung (21, 21a) gegenüber der Erdgravitationsrichtung in einem nicht vernachlässigbarem Winkel geneigt sind, der insbesondere in einem Bereich von 10° bis 80°, vorzugsweise 30° bis 70°, vorzugsweise bei ca. 25° liegt, wobei die Verschlußstellwegrichtung einer Ventileinheit zu zwei oder zu allen anderen drei Verschlußstellrichtungen einen rechten Winkel bildet, wobei insbesondere eine fünfte Ventileinheit vorgesehen ist, die einen linearen Verschlußstellweg aufweist, wobei insbesondere die fünfte Verschlußstellwegrichtung in der Normallage der Ventil-Anordnung (21, 21a) mit der Erdgravitationsrichtung zusammenfällt und vorzugsweise einen insbesondere gleichen Neigungswinkel mit der ersten bis vierten Verschlußstellwegrichtung, insbesondere einen Neigungswinkelbereich von etwa 20° bis 70°, bildet, wobei insbesondere die zweite Ventileinheit-Gruppe wenigstens ein Rückschlagventil aufweist, das unter Ausnützung der Gravitationskraft eine Verschlußbewegung dann auslöst, wenn die Ventil-Anordnung (21, 21a) aus der Normallage über eine der ersten Ventileinheit-Gruppe zugeordneten, ersten Not-Lage hinaus in eine zweite Not-Lage gekippt wird.

7. Ventil-Anordnung nach einem der vorangegangenen Ansprüche, **dadurch gekennzeichnet, daß** für jede Ventileinheit ein zulässiger Wirkkegelbereich um eine Verschlußwegrichtung derart definiert ist, daß die Ventileinheit dann in die Verschlußstellung bingbar ist, wenn die Wirkrichtung einer Stellkraft innerhalb des Wirkkegelbereichs liegt, wobei insbesondere der Wirkkegelbereich Kegelöffnungswinkel von mindestens bis ca. 45°, vorzugsweise bis ca. 60°, vorzugsweise bis ca. 90°, vorzugsweise bis 180°, aufweist, wobei insbesondere die Wirkkegelbereiche der Ventileinheiten derart im Raum ausgerichtet sind, daß sie sich teilweise zur Abdeckung sämtlicher Raumrichtungen überlappen, so daß in jeder beliebigen Lage der Ventil-Anordnung (21, 21a) im dreidimensionalen Raum bei einer entsprechend wirkender Stellkraft mindestens eine Ventileinheit in die Verschlußstellung verbracht wird, wobei insbesondere vier Ventileinheiten der ersten Ventileinheit-Gruppe einen Wirkkegelbereich mit einem Kegelöffnungswinkel von ca. 60° aufweisen, wobei insbesondere die wenigstens eine Ventileinheit der zweiten Ventileinheit-Gruppe einen Wirkkegelbereich mit einem Kegelöffnungswinkel von ca. 180° aufweist.

8. Ventil-Anordnung nach einem der vorangegangenen Ansprüche, **dadurch gekennzeichnet, daß** sämtliche Ventileinheiten in einer gemeinsamen Ebene liegen.

9. Ventil-Anordnung nach einem der vorangegangenen Ansprüche, **dadurch gekennzeichnet, daß** vier Ventileinheiten in einer Kreuzanordnung zueinander positioniert sind.

10. Ventil-Anordnung nach einem der vorangegangenen Ansprüche, **dadurch gekennzeichnet, daß** vier Ventileinheiten insbesondere der ersten Ventileinheit-Gruppe im wesentlichen auf einer gemeinsamen Kreislinie angeordnet sind, wobei im Zwischenraum zweier Ventileinheiten der vier Ventileinheiten wenigstens eine weitere Ventileinheit insbesondere der zweiten Ventileinheit-Gruppe, vorzugsweise zwei weitere Ventileinheiten, vorzugsweise drei weitere Ventileinheiten, und insbesondere der Auslaß (33) der Ventil-Anordnung (21, 21a) angeordnet sind.

11. Ventil-Anordnung nach einem der vorangegangenen Ansprüche, **dadurch gekennzeichnet, daß** mindestens zwei Ventileinheiten insbesondere der ersten Ventileinheit-Gruppe einen Schwimmkörper umfassen, der in einer linearen Führung des Gehäusekörpers angeordnet ist.

12. Ventil-Anordnung nach einem der vorangegangenen Ansprüche, **dadurch gekennzeichnet, daß** zumindest eine Ventileinheit, vorzugsweise zwei Ventileinheiten, als Rückschlagventil/-e ausgebildet ist/sind.

13. Ventil-Anordnung nach einem der vorangegangenen Ansprüche, **dadurch gekennzeichnet, daß** die mindestens drei Ventileinheiten in einem Gehäusekörper untergebracht sind, der insbesondere aus einem Stück gefertigt, insbesondere aus einem Kunststoff-Stück gespritzt ist.

14. Ventil-Anordnung nach einem der vorangegangenen Ansprüche, **dadurch gekennzeichnet, daß** die Verbindungsleitung (27, 29, 107) zwischen dem Einlaß (31, 31a) und dem Auslaß (33) der Ventil-Anordnung (21, 21a) mit mindestens einem Richtungswechsel, wie einer Kehre, insbesondere ca. 180°- und/oder ca. 270°-Kehre und/oder einer Abbiegung insbesondere für den gesamten Flüidstrom gestaltet ist, wobei insbesondere ein Richtungswechsel zwischen zwei Kammern liegt, in denen jeweils eine Ventileinheit untergebracht ist, wobei vorzugsweise mehrere Richtungswechsel vorgesehen sind.

15. Ventil-Anordnung nach einem der vorangegangenen Ansprüche, **dadurch gekennzeichnet, daß** sich die Verbindungsleitung (27, 29, 107) zumindest teilweise kanalförmig und/oder labyrinthartig durch einen Gehäusekörper erstreckt.

16. Ventil-Anordnung nach einem der vorangegangenen Ansprüche, **dadurch gekennzeichnet, daß** die Verbindungsleitung (27, 29, 107) von einem Gehäusekörper und wenigstens einer Abdeckung, vorzugsweise einer dem Äußeren des Behälters zuzuwendenden Abdeckung und einer dem Inneren des Behälters zuzuwendenden Abdeckung begrenzt ist.

17. Ventil-Anordnung nach einem der vorangegangenen Ansprüche, **dadurch gekennzeichnet, daß** die Verbindungsleitung (27, 29, 107) sich zumindest abschnittsweise in wenigstens zwei Ebenen erstreckt, wobei insbesondere zumindest ein Teil der Ventileinheiten, vorzugsweise sämtliche Ventileinheiten, in Verbindungsstücken der Verbindungsleitung (27, 29, 107) zwischen den beiden Ebenen untergebracht sind.

18. Ventil-Anordnung nach einem der vorangegangenen Ansprüche, **dadurch gekennzeichnet, daß** der Gehäusekörper flach ausgebildet ist, insbesondere erheblich größere Ausdehnungen in Längs- und Breitenrichtung als in Höhenrichtung aufweist.

19. Ventil mit einem Gehäusekörper, in dem eine nach einem der Ansprüche 1 bis 18 ausgebildete Ventil-Anordnung (21, 21a) zumindest teilweise untergebracht ist, wobei insbesondere der Gehäusekörper die Verbindungsleitung (27, 29, 107) zumindest teilweise begrenzt und vorzugsweise mindestens eine an dem Gehäuse befestigbare Abdeckungen vorgesehen ist.

20. Behälter mit einer nach einem der Ansprüche 1 bis 18 ausgebildeten Ventil-Anordnung (21, 21a) oder einem Ventil nach Anspruch 19, wobei insbesondere der Auslaß (33) mit einem Entgasungskanister verbindbar ist und insbesondere die Ventil-Anordnung (21, 21a) oder das Ventil in einem Behälterwandabschnitt ortsfest installiert ist, welcher Behälterwandabschnitt vorzugsweise in einer horizontalen Ebene liegt, die in einem Normalbetriebsmodus des Behälters im wesentlichen senkrecht zur Erdgravitationsrichtung liegt.

## Claims

1. Valve arrangement for a tank, such as a fuel tank (11), comprising an inlet (31, 31a) which is to face the tank interior, an outlet (33) which is to face the tank exterior, and a fluidal connecting line (27, 29, 107) between the inlet (31, 31a) and the outlet (33), wherein at least three self-closing valve units are arranged in the course of the fluidal connecting line (27, 29, 107), **characterized in that** the at least three self-closing valve units are arranged in series and are coordinated with one another in such a manner that, for different predeterminable positions of the valve arrangement (21, 21a) in 3-D, at least one valve unit is activated in each case in a manner such that it prevents or at least obstructs an outflow of the liquid through the connecting line (27, 29, 107).

2. Valve arrangement according to Claim 1, **characterized in that** three, four, five, six, seven, more than seven or at most seven valve units are arranged in series in the course of the fluidal connecting line (27, 29, 107).

3. Valve arrangement according to Claim 1 or 2, **characterized in that** the at least three valve units are designed so as, in a passage position, to allow a gas flow through the valve arrangement (21, 21a), in particular for degassing and/or ventilation purposes.

4. Valve arrangement according to one of the preceding claims, **characterized in that**, in a normal operating mode of the valve arrangement (21, 21a), which mode can be defined in particular by an essentially horizontal position of the tank, all of the valve units take up a passage position and, in an emergency operating mode of the valve arrangement (21, 21a), which mode can be defined in particular by a position of the tank in which it is tilted in relation to the horizontal position and/or by an inclined emergency position of the tank and/or by a certain liquid filling level of the tank, at least one valve unit automatically takes up a closure position.

5. Valve arrangement according to one of the preceding claims, **characterized in that** every emergency position of the tank and/or a certain liquid filling level of the tank is/are each assigned at least one self-closing valve unit, in particular, in certain emergency position regions, at least two automatically closing valve units.

6. Valve arrangement according to one of the preceding claims, **characterized in that** a first valve unit group is provided which has at least one valve unit which, as soon as the liquid level essentially reaches one valve unit, closes the connecting line for a first emergency position of the valve arrangement, which position is tilted or inclined from a normal position or gas passage position of the valve arrangement (21, 21a), in particular in each tilting and/or inclination direction within an angle of inclination range of up to 100°, with, in particular, a second valve unit group being provided which comprises at least one valve unit, and as soon as the liquid level reaches the at least one valve unit, closes the connecting line (27, 29) for a second emergency position which is tilted and/or inclined from the normal position or gas passage position and beyond the first emergency position, in particular in each tilting and/or inclination direction within an angle of inclination range in relation to the normal position of the valve arrangement (21, 21a) of essentially over 80° to 180°, with, in particular, the first valve unit group comprising four valve units which each have a linear closure adjusting distance, in particular are oriented in different directions in space and, in the normal position of the valve arrangement (21, 21a), are preferably inclined in relation to the direction of gravity at a not insignificant angle lying in particular in a range of from 10° to 80°, preferably 30° to 70°, preferably at approx. 25°, with the closure adjusting distance direction of a valve unit forming a right angle to two or to all three other closure adjusting directions, with, in particular, a fifth valve unit being provided which has a linear closure adjusting distance, with, in particular, the fifth closure adjusting distance direction coinciding with the direction of gravity, in the normal position of the valve arrangement (21, 21a), and preferably forming an, in particular, identical angle of inclination with the first to fourth closure adjusting distance directions, in particular an angle of inclination range of approximately 20° to 70°, with, in particular, the second valve unit group having at least one nonreturn valve which, using gravitational force, then triggers a closure movement if the valve arrangement (21, 21a) is tilted from the normal position beyond a first emergency position, which is assigned to the first valve unit group, into a second emergency position.

7. Valve arrangement according to one of the preceding claims, **characterized in that**, for each valve unit, a permissible active conical region about a closure distance direction is defined in such a manner that the valve unit can be brought into the closure position if the active direction of an adjusting force lies within the active conical region, with, in particular, the active conical region having conical opening angles of at least up to approx. 45°, preferably up to approx. 60°, preferably up to approx. 90°, preferably up to 180°, with, in particular, the active conical regions of the valve units being oriented in space in such a manner that they partially overlap to cover all of the directions in space, and therefore, in any desired position of the valve arrangement (21, 21a) in 3-D, at least one valve unit is brought into the closure position in the event of a correspondingly acting adjusting force, with, in particular, four valve units of the first valve unit group having an active conical region with a conical opening angle of approx. 60°, and with, in particular, the at least one valve unit of the second valve unit group having an active conical region with a conical opening angle of approx. 180°.

8. Valve arrangement according to one of the preceding claims, **characterized in that** all of the valve units lie in a common plane.

9. Valve arrangement according to one of the preceding claims, **characterized in that** four valve units are positioned in a cross arrangement with respect to one another.

10. Valve arrangement according to one of the preceding claims, **characterized in that** four valve units, in particular of the first valve unit group, are essentially arranged on a common circle line, wherein at least one further valve unit, in particular of the second valve unit group, preferably two further valve units, preferably three further valve units, and, in particular, the outlet (33) of the valve arrangement (21, 21a), is/are arranged in the intermediate space between two valve units of the four valve units.

11. Valve arrangement according to one of the preceding claims, **characterized in that** at least two valve units, in particular of the first valve unit group, comprise a floating body which is arranged in a linear guide of the housing body.

12. Valve arrangement according to one of the preceding claims, **characterized in that** at least one valve unit, preferably two valve units, is/are designed as a nonreturn valve/nonreturn valves.

13. Valve arrangement according to one of the preceding claims, **characterized in that** the at least three valve units are accommodated in a housing body which, in particular, is manufactured from one piece, in particular is injection-moulded from a plastic piece.

14. Valve arrangement according to one of the preceding claims, **characterized in that** the connecting line (27, 29, 107) between the inlet (31, 31a) and the outlet (33) of the valve arrangement (21, 21a) is designed with at least one change of direction, such as a turn, in particular a turn of approx. 180° and/or approx. 270°, and/or with a bent portion, in particular for the entire fluid flow, with, in particular, one change of direction lying between two chambers in which a respective valve unit is accommodated, with, preferably, a plurality of changes of direction being provided.

15. Valve arrangement according to one of the preceding claims, **characterized in that** the connecting line (27, 29, 107) extends at least partially in a channel-shaped manner and/or in the manner of a labyrinth through a housing body.

16. Valve arrangement according to one of the preceding claims, **characterized in that** the connecting line (27, 29, 107) is bounded by a housing body and at least one covering, preferably a covering which is to face the exterior of the tank and a covering which is to face the interior of the tank.

17. Valve arrangement according to one of the preceding claims, **characterized in that** the connecting line (27, 29, 107) extends at least in some sections in at least two planes, with, in particular, at least some of the valve units, preferably all of the valve units, being accommodated in connecting pieces of the connecting line (27, 29, 107) between the two planes.

18. Valve arrangement according to one of the preceding claims, **characterized in that** the housing body is of a flat design, and, in particular, has considerably greater extensions in the longitudinal and width direction than in the vertical direction.

19. Valve with a housing body in which a valve arrangement (21, 21a) designed according to one of Claims 1 to 18 is at least partially accommodated, with, in particular, the housing body at least partially bounding the connecting line (27, 29, 107) and, preferably, at least one covering which can be fastened to the housing being provided.

20. Tank with a valve arrangement (21, 21a) designed according to one of Claims 1 to 18 or with a valve according to Claim 19, with, in particular, the outlet (33) being connectable to a degassing canister, and, in particular, the valve arrangement (21, 21a) or the valve being installed in a fixed position in a tank wall section, which tank wall section preferably lies in a horizontal plane which, in a normal operating mode of the tank, lies essentially perpendicular to the direction of gravity.

## Revendications

1. Agencement de soupapes pour un réservoir, tel qu'un réservoir de carburant (11), comprenant une admission (31, 31a), à tourner en direction de l'intérieur du réservoir, un échappement (33), à tourner en direction de l'extérieur du réservoir, et une conduite de raccordement fluidique (27, 29, 107) entre l'admission (31, 31a) et l'échappement (33), au moins trois unités de soupapes à fermeture automatique étant disposées dans le tracé de la conduite de raccordement fluidique (27, 29; 107), **caractérisé en ce que** les au moins trois unités de soupapes à fermeture automatique sont montées en série et adaptées les unes aux autres de telle sorte que, pour des positions prédéfinissables différentes de l'agencement de soupapes (21, 21a) dans l'espace tridimensionnel, au moins une unité de soupape est respectivement activée en jugulant, ou au moins en entravant, une fuite du liquide au travers de la conduite de raccordement (27, 29, 107).

2. Agencement de soupapes suivant la revendication 1, **caractérisé en ce que** trois, quatre, cinq, six, sept, plus de sept ou au maximum sept unités de soupapes sont montées en série dans le tracé de la conduite de raccordement fluidique (27, 29, 107).

3. Agencement de soupapes suivant l'une des revendications 1 et 2, **caractérisé en ce que** les au moins trois unités de soupapes sont conçues pour autoriser dans une position de passage un écoulement de gaz au travers de l'agencement de soupapes (21, 21a), en particulier pour le dégazage et/ou l'aération.

4. Agencement de soupapes suivant l'une des revendications précédentes, **caractérisé en ce que** toutes les unités de soupapes occupent une position de passage dans un mode de fonctionnement normal de l'agencement de soupapes (21, 21a), qui est définissable en particulier par une position essentiellement horizontale du réservoir, et au moins une unité de soupape occupe spontanément une position de fermeture dans un mode de fonctionnement de secours de l'agencement de soupapes (21, 21a), qui est définissable en particulier par une position d'urgence du réservoir, basculée et/ou inclinée par rapport à la position horizontale, et/ou par un niveau de liquide défini du réservoir.

5. Agencement de soupapes suivant l'une des revendications précédentes, **caractérisé en ce qu'**au moins une unité de soupape à fermeture automatique, en particulier au moins deux unités de soupapes à fermeture spontanée dans des domaines de positions de secours définis, sont associées à toute position d'urgence du réservoir et/ou à un niveau de liquide défini du réservoir.

6. Agencement de soupapes suivant l'une des revendications précédentes, **caractérisé en ce qu'**il est prévu un premier groupe d'unités de soupapes comprenant au moins une unité de soupape, qui ferme la conduite de raccordement pour une première position de secours de l'agencement de soupapes, basculée ou inclinée d'une position normale ou de passage de gaz de l'agencement de soupapes (21, 21a), en particulier dans chaque direction de basculement et/ou d'inclinaison à l'intérieur d'une plage d'angles d'inclinaison allant jusqu'à 100°, dès que le niveau de liquide atteint essentiellement une unité de soupape, un second groupe d'unités de soupapes étant en particulier prévu, lequel comprend au moins une unité de soupape et ferme la conduite de raccordement (27, 29) pour une seconde position de secours basculée et/ou inclinée de la position normale ou de passage de gaz, au-delà de la première position de secours, en particulier dans chaque direction de basculement et/ou d'inclinaison à l'intérieur d'une plage d'angles d'inclinaison par rapport à la position normale de l'agencement de soupapes (21, 21a) d'essentiellement de plus de 80° à 180°, dès que le niveau de liquide atteint la au moins une unité de soupape, en particulier le premier groupe d'unités de soupapes comprenant quatre unités de soupapes qui présentent chacune un parcours de réglage de fermeture linéaire, sont en particulier orientées dans des directions spatiales différentes et sont de préférence inclinées dans la position normale de l'agencement de soupapes (21, 21a) par rapport à la direction gravitationnelle terrestre sous un angle non négligeable, qui se situe en particulier dans une plage de 10° à 80°, de préférence de 30° à 70°, préférentiellement de l'ordre de 25°, la direction de parcours de réglage de fermeture d'une unité de soupape formant un angle droit par rapport à deux ou à toutes les trois autres directions de parcours de réglage de fermeture, une cinquième unité de soupape étant en particulier prévue, laquelle présente un parcours de réglage de fermeture linéaire, en particulier la cinquième direction de parcours de réglage de fermeture coïncidant dans la position normale de l'agencement de soupapes (21, 21a) avec la direction gravitationnelle terrestre et formant de préférence un angle d'inclinaison, en particulier égal, avec la première à la quatrième direction de parcours de réglage de fermeture, en particulier une plage d'angles d'inclinaison d'environ 20° à 70°, en particulier le second groupe d'unités de soupapes comportant au moins une soupape anti-retour qui déclenche, en utilisant la force gravitationnelle, un mouvement de fermeture lorsque l'agencement de soupapes (21, 21a) bascule de la position normale dans une seconde position de secours, au-delà de la première position de secours associée au premier groupe d'unités de soupapes.

7. Agencement de soupapes suivant l'une des revendications précédentes, **caractérisé en ce que**, pour chaque unité de soupape, un domaine de cône actif admissible autour d'une direction de parcours de fermeture est défini de telle sorte que l'unité de soupape peut être amenée dans la position de fermeture, lorsque la direction active d'une force de réglage se situe à l'intérieur du domaine de cône actif, en particulier le domaine de cône actif présentant des angles d'ouverture de cône d'au moins jusqu'à environ 45°, de préférence jusqu'à environ 60°, préférentiellement jusqu'à environ 90°, de préférence jusqu'à 180°, en particulier les domaines de cônes actifs des unités de soupapes étant orientés dans l'espace de telle sorte qu'ils se chevauchent en partie pour recouvrir toutes les directions spatiales si bien que, dans n'importe quelle position de l'agencement de soupapes (21, 21a) dans l'espace tridimensionnel, avec une force de réglage agissant en conséquence, au moins une unité de soupape est amenée dans la position de fermeture, en particulier quatre unités de soupapes du premier groupe d'unités de soupapes présentant un domaine de cône actif avec un angle d'ouverture de cône d'environ 60°, en particulier la au moins une unité de soupape du second groupe d'unités de soupapes présentant un domaine de cône actif avec un angle d'ouverture d'environ 180°,

8. Agencement de soupapes suivant l'une des revendications précédentes, **caractérisé en ce que** toutes les unités de soupapes se situent dans un plan commun.

9. Agencement de soupapes suivant l'une des revendications précédentes, **caractérisé en ce que** quatre unités de soupapes sont positionnées mutuellement dans un agencement en croix.

10. Agencement de soupapes suivant l'une des revendications précédentes, **caractérisé en ce que** quatre unités de soupapes, en particulier du premier groupe d'unités de soupapes, sont disposées essentiellement sur une circonférence commune, au moins une autre unité de soupape, en particulier du second groupe d'unités de soupapes, de préférence deux autres unités de soupapes, préférentiellement trois autres unités de soupapes, et en particulier l'échappement (33) de l'agencement de soupapes (21, 21a), étant disposés dans l'espace intermédiaire de deux unités de soupapes des quatre unités de soupapes.

11. Agencement de soupapes suivant l'une des revendications précédentes, **caractérisé en ce qu'**au moins deux unités de soupapes, en particulier du premier groupe d'unités de soupapes, comportent un flotteur disposé dans un guidage linéaire du corps de carter.

12. Agencement de soupapes suivant l'une des revendications précédentes, **caractérisé en ce qu'**au moins une unité de soupape, de préférence deux unités de soupapes, est/sont réalisée/s sous forme de soupape/s anti-retour.

13. Agencement de soupapes suivant l'une des revendications précédentes, **caractérisé en ce que** les au moins trois unités de soupapes sont logées dans un corps de carter fabriqué en particulier d'une pièce, en particulier injecté d'une pièce en matière plastique.

14. Agencement de soupapes suivant l'une des revendications précédentes, **caractérisé en ce que** la conduite de raccordement (27, 29, 107) est configurée entre l'admission (31, 31a) et l'échappement (33) de l'agencement de soupapes (21, 21a) avec au moins un changement de direction, tel qu'un lacet, en particulier un lacet d'environ 180° et/ou d'environ 270° et ou un pliage, notamment pour l'ensemble du courant fluidique, en particulier un changement de direction se situant entre deux chambres, dans lesquelles est respectivement logée une unité de soupape, plusieurs changements de direction étant alors de préférence prévus.

15. Agencement de soupapes suivant l'une des revendications précédentes, **caractérisé en ce que** la conduite de raccordement (27, 29, 107) s'étend au moins en partie en forme de canal et/ou de labyrinthe au travers d'un corps de carter.

16. Agencement de soupapes suivant l'une des revendications précédentes, **caractérisé en ce que** la conduite de raccordement (27, 29, 107) est délimitée par un corps de carter et par au moins une couverture, de préférence une couverture à tourner en direction de l'extérieur du réservoir et une couverture à tourner en direction de l'intérieur du réservoir.

17. Agencement de soupapes suivant l'une des revendications précédentes, **caractérisé en ce que** la conduite de raccordement (27, 29, 107) s'étend au moins par sections dans au moins deux plans, en particulier au moins une partie des unités de soupapes, de préférence toutes les unités de soupapes, étant alors logées dans des pièces de raccordement de la conduite (27, 29, 107) entre les deux plans.

18. Agencement de soupapes suivant l'une des revendications précédentes, **caractérisé en ce que** le corps de carter a une configuration plate, présente en particulier des extensions considérablement supérieures dans la direction en longueur et en largeur que dans la direction en hauteur.

19. Soupape avec un corps de carter, dans lequel est logé au moins en partie un agencement de soupapes (21, 21a) réalisé suivant l'une des revendications 1 à 18, en particulier le corps de carter délimitant au moins en partie la conduite de raccordement (27, 29, 107) et au moins une couverture, pouvant être fixée sur le carter, étant de préférence prévue.

20. Réservoir avec un agencement de soupapes (21, 21a) réalisé suivant l'une des revendications 1 à 18, ou avec une soupape suivant la revendication 19, en particulier l'échappement (33) pouvant être relié à une nourrice de dégazage et en particulier l'agencement de soupapes (21, 21a) ou la soupape étant installés de façon stationnaire dans une section de paroi du réservoir, laquelle section de paroi se situe de préférence dans un plan horizontal, qui se situe dans un mode de fonctionnement normal du réservoir essentiellement de façon perpendiculaire à la direction gravitationnelle terrestre.
